# EUROPEAN PATENT APPLICATION

(11) **EP 1 903 382 A1**
(43) Date of publication of application: **26.03.2008**
(21) Application number: 07018286.0
(22) Date of filing: 18.09.2007
(51) Int. Cl.: G02F 1/13357

(54) **Liquid crystal display**

(30) Priority: 20.09.2006 KR 20060091375
(71) Applicant: Samsung Electronics Co., Ltd., Yeongtong-gu Suwon-city, Gyeonggi-do 442-742 (KR)
(72) Inventor: Lee, Jeoung-gwen, Gyeonggi-do (KR); Kim, Chang-hol, Seoul (KR)
(74) Representative: Dr. Weitzel & Partner

(57) **Abstract**

A liquid crystal display (100) including a liquid crystal panel (110) displaying an image, a light source (120) providing light to the liquid crystal panel (110), and an optical body (200) including a light-transmitting portion (210) transmitting light emitted from the light source (120) to the liquid crystal panel (110) and a securing platform (220) formed along edges of the light-transmitting portion (210) and on which the liquid crystal panel (110) is disposed, wherein the light-transmitting portion (210) and the securing platform (220) are formed as one body.

## Description

### BACKGROUND OF THE INVENTION

### 1, Field of the Invention

The present invention relates to a liquid crystal display, and more particularly, to a liquid crystal display with integrally formed structural elements.

### 2. Description of Related Art

Liquid crystal displays (LCDs) are one of the most commonly used flat panel displays. Liquid crystal displays, which include two panels having a plurality of electrodes arranged thereon and a liquid crystal material interposed between the two panels, control the transmittance of incident light by applying voltages to the electrodes to rearrange liquid crystal molecules of the liquid crystal material.

In LCDs, a plurality of components such as a liquid crystal panel, structural elements for securely receiving the liquid crystal panel, a light guide plate (or a diffusion plate), and a reflective sheet are separately manufactured and provided.

For example, in edge-type LCDs, structural elements for securely receiving a liquid crystal panel, a light guide plate, a light source cover, etc. are separately manufactured and provided. Similarly, in direct-type LCDs, structural elements for securely receiving a liquid crystal panel, a diffusion plate, etc, are separately manufactured and provided.

As demand for LCDs that are well suited for mass production has increased, demand for components of the LCDs satisfying needs including, simplification, integration, and process automation, has also increased. When components of LCDs are separately manufactured and provided, the number of structural elements needed for each component increases, thereby incurring higher manufacturing cost and making process automation difficult.

Therefore, a need exists for an LCD having a reduced number of components by integrally forming the structural elements or using substitutes for the structural elements,

### SUMMARY OF THE INVENTION

In an exemplary embodiment, a liquid crystal display including a liquid crystal panel displaying an image, a light source providing light to the liquid crystal panel, and an optical body including a light-transmitting portion transmitting light emitted from the light source to the liquid crystal panel and a securing platform formed along edges of the light-transmitting portion and on which the liquid crystal panel is disposed, wherein the light-transmitting portion and the securing platform are formed as one body.

In an exemplary embodiment, a liquid crystal display includes a liquid crystal panel, an optical body for guiding light emitted from at least one light source, wherein a securing platform for securely receiving the liquid crystal panel is disposed along edges of the optical body and wherein the at least one light source is disposed at a side of the optical body, and a bottom chassis for receiving the liquid crystal panel, the optical body, and the at least one light source.

In an exemplary embodiment, there is provided a liquid crystal display including a liquid crystal panel, an optical body for diffusing light emitted from at least one light source, wherein a securing platform for securely receiving the liquid crystal panel is disposed along edges of the optical body, the at least one light source disposed below the optical body, and a bottom chassis for receiving the liquid crystal panel, the optical body, and the at least one light source,

### BRIEF DESCRIPTION OF THE DRAWINGS

The present invention will become more apparent by describing in detail preferred embodiments thereof with reference to the attached drawings, in which:
FIG. 1 is an exploded perspective view illustrating a liquid crystal display according to an embodiment of the present invention;
FIG. 2 is a perspective view illustrating an optical body included in the liquid crystal display of FIG. 1;
FIG. 3A is a right side view of the optical body of FIG. 2;
FIG. 3B is a sectional view taken along a line A-A' of FIG. 2;
FIG. 3C is a sectional view taken along a line B-B' of FIG. 2;
FIG. 3D is a sectional view taken along a line C-C' of FIG. 2;
FIG. 4 is a schematic perspective view illustrating the assembling of the optical body of FIG. 2 and optical sheets;
FIG. 5 is a perspective view illustrating a bottom chassis included in the liquid crystal display of FIG. 1;
FIG. 6 is a schematic perspective view illustrating the assembling of the optical body of FIG. 2 and the bottom chassis of FIG. 5;
FIG. 7A is a sectional view taken along a line D-D' of FIG. 1;
FIG. 7B is a sectional view taken along a line E-E' of FIG. 1;
FIG. 7C is a sectional view taken along a line F-F' of FIG. 1;
FIG. 8 is an exploded perspective view illustrating a liquid crystal display according to an embodiment of the present invention;
FIG. 9 is a perspective view illustrating an optical body included in the liquid crystal display of FIG. 8
FIG. 10A is a right side view of the optical body of FIG. 9;
FIG. 10B is a sectional view taken along a line G-G' of FIG. 9;
FIG. 10C is a sectional view taken along a line H-H' of FIG. 9;
FIG. 10D is a sectional view taken along a line I-I' of FIG. 9;
FIG. 11A is a sectional view taken along a line J-J' of FIG. 8;
FIG. 11B is a sectional view taken along a line K-K' of FIG. 8;
FIG. 11C is a sectional view taken along a line L-L' of FIG. 8; and
FIG. 12 is an exploded perspective view illustrating an embodiment of a liquid crystal display according to the present invention.

### DETAILED DESCRIPTION OF PREFERRED EMBODIMENTS

The present invention and methods of accomplishing the same may be understood more readily by reference to the following detailed description of preferred embodiments and the accompanying drawings. The present invention may, however, be embodied in many different forms and should not be construed as being limited to embodiments set forth herein. Rather, embodiments are provided so that this disclosure will be thorough and complete and will fully convey the concept of the invention to those skilled in the art, and the present invention will only be defined by the appended claims.

In the following description, it will be understood that when an element or a layer is referred to as being "on" another element or layer, it can be directly on the other element or layer, or intervening layers or elements may also be present. In contrast, when an element is referred to as being "directly on" another element, there are no intervening elements present. The terms "and/or" should be taken to mean each and at least one combination of referenced items.

Spatially relative terms, such as "below", "beneath", "lower", "above", "upper" and the like, may be used herein for ease of description to describe one element or feature's relationship to another element(s) or feature(s) as illustrated in the figures. It will be understood that spatially relative terms are intended to encompass different orientations of the device in use or operation in addition to the orientation depicted in the figures. Like reference numerals refer to like elements throughout the specification.

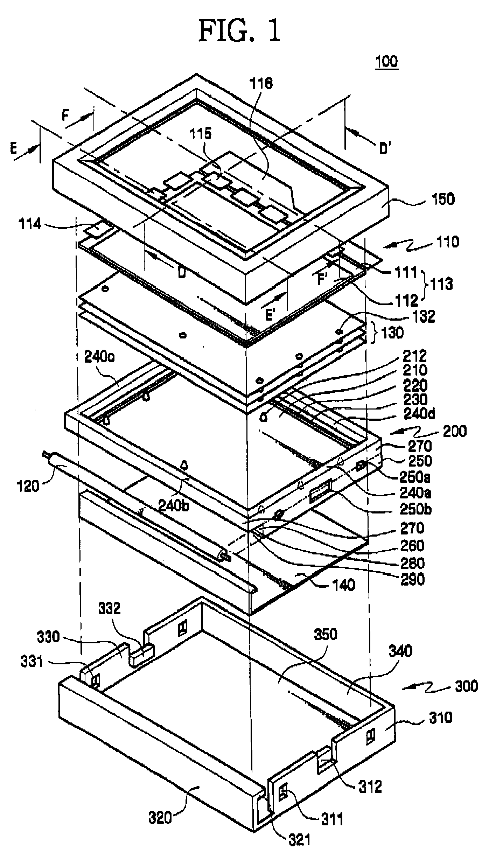

Hereinafter, a liquid crystal display according to an embodiment of the present invention will be described in detail with reference to FIGS. 1 through 7C. FIG. 1 is an exploded perspective view illustrating a liquid crystal display according to an embodiment of the present invention.

Referring to FIG, 1, a liquid crystal display 100 according to an embodiment of the present invention includes a liquid crystal panel assembly 110, a light source 120, optical sheets 130, a reflective sheet 140, a top chassis 150, an optical body 200, and a bottom chassis 300.

The liquid crystal panel assembly 110 includes a liquid crystal panel 113 including a thin film transistor (TFT) substrate 111 and a color filter substrate 112, liquid crystal material (not shown), gate tape carrier packages 114, data tape carrier packages 115, and a printed circuit board 116.

In the liquid crystal panel 113, the TFT substrate 111 includes gate lines (not shown), data lines (not shown), an array of TFTs (not shown), pixel electrodes (not shown), etc. The color filter substrate 112 includes black matrices (not shown), a common electrode (not shown), etc., and is disposed opposite to the TFT substrate 111.

The liquid crystal panel 113 in which the above-described flat panel-shaped substrates are stacked is disposed in the optical body 200. The liquid crystal panel 113 is securely placed on a securing platform 220 formed around the edges of an upper surface of a bottom plate 210 of the optical body 200.

The gate tape carrier packages 114 are respectively connected to the gate lines in the TFT substrate 111, and the data tape carrier packages 115 are respectively connected to the data lines in the TFT substrate 111.

Various driving devices for processing gate driving signals and data driving signals are mounted on the printed circuit board 116 so that the gate driving signals and the data driving signals are input to the gate tape carrier packages 114 and the data tape carrier packages 115, respectively. The printed circuit board 116 is folded toward an optical body sidewall 240d and disposed between a bottom chassis sidewall 340 and the optical body sidewall 240d.

The light source 120 may be a cold cathode fluorescent lamp (CCFL). The CCFL may extend in a widthwise direction of the liquid crystal display 100.

The light source 120 may be an edge-type light source which is disposed at a side of the optical body 200, e.g., in a light source receiving space 290. The light source 120 may be disposed at a side of the optical body 200 as illustrated in FIG. 1, but may also be disposed at both sides of the optical body 200.

The light source 120 may be securely inserted in a socket (not shown). The light source 120 secured to the socket emits light toward the liquid crystal panel 113 through the bottom plate 210 of the optical body 200.

Light emitted from the light source 120 passes through the optical sheets 130 after passing through the bottom plate 210 of the optical body 200.

The optical sheets 130 serve to diffuse and focus light coming from the bottom plate 210.

The optical sheets 130 may include a diffusion sheet, a first prism sheet, a second prism sheet, etc.

The diffusion sheet is disposed above the light source 120 and serves to enhance the brightness and brightness uniformity of incident light from the light source 120.

The first prism sheet and the second prism sheet are disposed on the diffusion sheet to focus light diffused from the diffusion sheet and to output the focused light. If the first prism sheet can achieve sufficient brightness and viewing angle, the second prism sheet may be omitted.

The optical sheets 130 may be provided in the form of plates, and are disposed in the optical body 200, The optical sheets 130 are disposed on an upper surface of the bottom plate 210 of the optical body 200.

The optical sheets 130 include insertion holes 132 for fastening the optical sheets 130 to the bottom plate 210. The insertion holes 132 are formed in each of the diffusion sheet, the first prism sheet, and the second prism sheet.

The reflective sheet 140 is disposed below the optical body 200, and reflects upward some of the light that is not directed toward the liquid crystal panel 113 but below the light source 120 among light emitted from the light source 120.

The reflective sheet 140 may be manufactured by dispersing a reflective material, e.g., a white pigment such as titanium oxide, in a synthetic resin sheet. In this case, air bubbles for scattering light may be dispersed in the synthetic resin sheet.

The reflective sheet 140 may be provided as, e.g., a rectangular sheet.

The reflective sheet 140 is fixedly interposed between the optical body 200 and a bottom surface 350 of the bottom chassis 300 in a state in which the reflective sheet 140 is pressed under the optical body 200.

The reflective sheet 140 may be folded in a C-shaped form so that the C-shaped portion receives the light source 120. Thus, even though no light source cover is used in the liquid crystal display 100, the reflective sheet 140 can minimize light loss by reflecting light emitted from the light source 120.

The top chassis 150 is disposed on the liquid crystal panel 113 to cover an upper surface of the liquid crystal panel 113.

An opening for exposing the liquid crystal panel 113 to the outside is formed on an upper surface of the top chassis 150. The upper surface of the top chassis 150 may be bent down to press against edges of the upper surface of the liquid crystal panel 113, thereby fastening the liquid crystal panel 113.

The top chassis 150 is combined with the bottom chassis 300 by, for example, connection methods using hooks (not shown) or screws (not shown). The methods of connection between the top chassis 150 and the bottom chassis 300 may be modified in various manners.

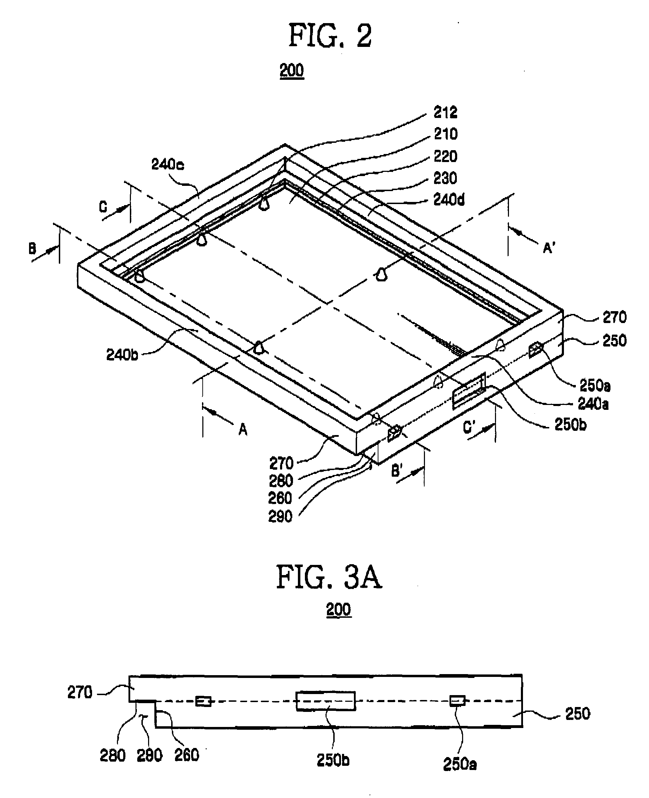

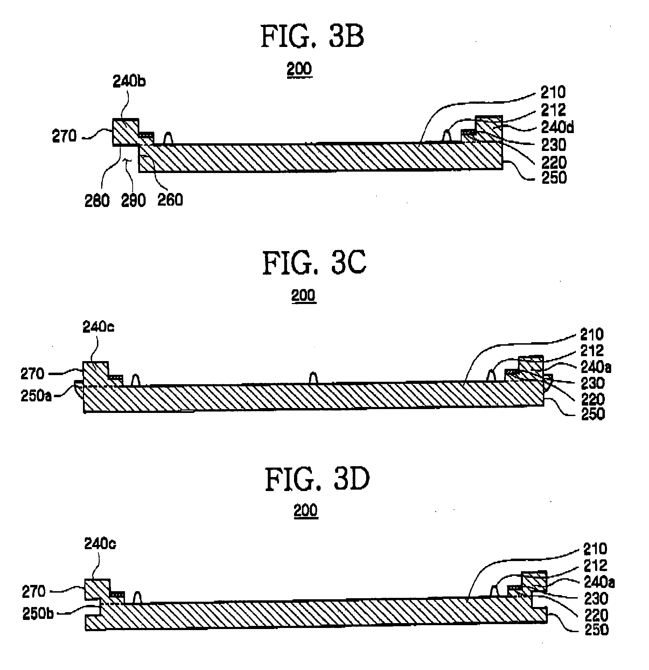

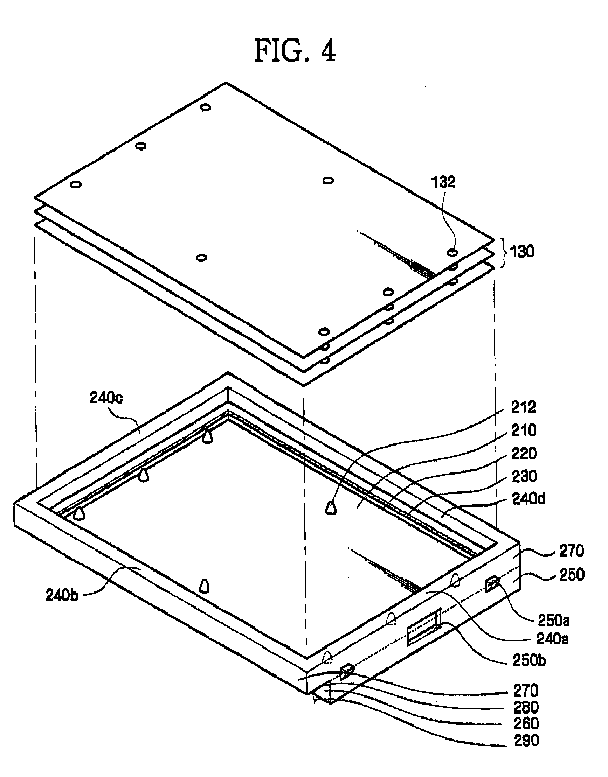

The optical body 200 will now be described in detail with reference to FIGS. 2 through 4. FIG. 2 is a perspective view illustrating an optical body included in the liquid crystal display of FIG, 1, FIG. 3A is a right side view of the optical body of FIG. 2, FIG. 3B is a sectional view taken along a line A-A' of FIG. 2, FIG. 3C is a sectional view taken along a line B-B' of FIG. 2, FIG. 3D is a sectional view taken along a line C-C' of FIG. 2, and FIG. 4 is a schematic perspective view illustrating the assembling of the optical body of FIG. 2 and optical sheets 130.

Referring to FIGS. 2 through 4, together with FIG. 1, the optical body 200 includes a bottom plate 210, a securing platform 220 formed around the edges of the upper surface of the bottom plate 210, and optical body sidewalls 240a, 240b, 240c, and 240d which extend outwardly and upwardly from the securing platform 220 to surround the securing platform 220. The optical body 200 is structured such that the bottom plate 210 for guiding light, the securing platform 220 for securely receiving the liquid crystal panel 113, and the optical body sidewalls 240a, 240b, 240c, and 240d are integrally formed.

The optical body 200 may be made of a transparent material, e.g., an acrylic resin (e.g., PMMA (polymethyl methacrylate)) or PC (polycarbonate), so that the bottom plate 210 can efficiently guide light.

The optical body 200 has a complicated structure including the bottom plate 210, the securing platform 220, the optical body sidewalls 240a, 240b, 240c, and 240d, and the light source receiving space 290. In order to achieve such a structure, the optical body 200 may be manufactured using an injection molding process,

The optical body 200 with the above-described structural characteristics transmits light emitted from the light source 120 to the liquid crystal panel 113. In detail, the bottom plate 210 of the optical body 200 guides light emitted from the light source 120 disposed at one side or both sides of the bottom plate 210 so that the light is substantially uniformly dispersed across the bottom plate 210, and then transmits the light to the liquid crystal panel 113 through scattering patterns formed on a surface of the bottom plate 210.

The bottom plate 210 may have a predetermined thickness, e.g., a thickness greater than the diameter of the light source 120, in order to efficiently guide light emitted from the light source 120.

When the angle of incident of light into the bottom plate 210 with respect to an upper or lower surface of the bottom plate 210 is greater than a critical angle of total internal reflection, the incident light is not emitted outside the bottom plate 210 but is substantially uniformly dispersed in the bottom plate 210.

Scattering patterns are formed on at least one of upper and lower surfaces of the bottom plate 210, e.g., on a lower surface of the bottom plate 210, so that guided light can be directed upward, The scattering patterns may be formed using an ink printing process. However, the present invention is not limited thereto, and the scattering patterns may also be formed as fine grooves, projections on the bottom plate 210, etc.

The scattering patterns serve to scatter internally reflected light in the bottom plate 210 and to emit the light out of the bottom plate 210. Light emitted upward from the bottom plate 210 is transmitted to the liquid crystal panel 113 through the optical sheet 130, whereas light emitted from below or toward the bottom plate 210 is reflected by the reflective sheet 140 disposed below the optical body 200 and then directed upward.

Among bottom plate outside surfaces 250 and 260, the bottom plate outside surface 250 which is disposed away from the light source 120 may be stained with a reflective white ink to reflect light directed to side portions of the liquid crystal display 100 from the above-described scattering patterns, thereby reducing light loss. The bottom plate outside surface 260, which is adjacent to the light source 120, is not colored in order to efficiently guide light emitted from the light source 120 into the optical body 200.

Embossing portions 212 may be disposed around the edges of the upper surface the bottom plate 210. The embossing portions 212 are inserted into the above-described insertion holes 132 of the optical sheets 130. By doing so, the optical sheets 130 can be fastened to the optical body 200.

The securing platform 220 is formed along the edges of the upper surface of the bottom plate 210.

The securing platform 220 is formed in a rectangular frame which has a predetermined height from the bottom plate 210. The liquid crystal panel 113 is securely placed on the securing platform 220, and the optical sheets 130 are received in an opening defined by the securing platform 220.

A resin layer 230 may be further formed on the securing platform 220 to substantially prevent the movement of the liquid crystal panel 113. When the resin layer 230 having a predetermined frictional force with the liquid crystal panel 113 is interposed between the liquid crystal panel 113 and the securing platform 220, the movement of the liquid crystal panel 113 is substantially prevented, and the liquid crystal panel 113 can be securely placed on the securing platform 220, and more specifically, on the resin layer 230 disposed on the securing platform 220.

The resin layer 230 may be made of a material having a sufficient frictional force with the liquid crystal panel 113, e.g., silicon rubber.

The resin layer 230 may be made of a black- or gray-based material (or other suitable material) to substantially prevent a light leakage phenomenon through the securing platform 220 made of a transparent material.

Furthermore, to prevent a light leakage phenomenon through a microspace defined between the resin layer 230 and the securing platform 220, the securing platform 220, and more specifically, the upper surface and peripheral surface of the securing platform 220, may be stained with black-based ink.

However, there is no limitation on a material for the resin layer 230 provided that the resin layer 230 can provide a frictional force between the securing platform 220 and the liquid crystal panel 113 to substantially prevent the movement of the liquid crystal panel 113 and is made of a black- or gray-based material (or other suitable material) to substantially prevent a light leakage phenomenon.

The optical body sidewalls 240a, 240b, 240c, and 240d extend outwardly and upwardly from the securing platform 220 to surround the securing platform 220.

The optical body sidewalls 240a, 240b, 240c, and 240d form a rectangular frame, like the securing platform 220, and surround side portions of the liquid crystal panel 113 so as to secure the liquid crystal panel 113 to the securing platform 220.

Among the optical body sidewalls 240a, 240b, 240c, and 240d, the optical body sidewall 240b protrudes outwardly from the bottom plate outside surface 260. The optical body sidewall 240b, together with the bottom plate outside surface 260, defines the light source receiving space 290. While FIGS. 2 through 4 illustrate the light source receiving space 290 formed only at the optical body sidewall 240b, the present invention is not limited thereto and the light source receiving space 290 may also be formed at the opposite side to the optical body sidewall 240b. That is, the light source receiving space 290 may be formed at one side or both sides of the optical body 200.

The light source 120 is received in the light source receiving space 290 and is surrounded by the bottom plate outside surface 260, a lower surface 280 of the optical body sidewall 240b, a bottom chassis sidewall 320, and the bottom surface 350 of the bottom chassis 300. Therefore, the light source 120 can be covered without using a separate light source cover.

The lower surface 280 of the optical body sidewall 240b placed directly above the light source 120, i.e., the lower surface 280 of the optical body sidewall 240b defining the light source receiving space 290, may be stained with white-based ink to substantially prevent loss of light vertically emitted from the light source 120.

The optical body sidewalls 240a, 240b, 240c, and 240d except the lower surface 280 of the optical body sidewall 240b may be stained with black-based ink to substantially prevent light leakage. Among the four sides constituting a substantially rectangular frame of the optical body sidewalls 240a, 240b, 240c, and 240d, the entire surface of each of three of the optical body sidewalls 240a, 240c, and 240d which are disposed away from the light source receiving space 290 may be stained with black-based ink. The lower surface 280 of the optical body sidewall 240b defining the light source receiving space 290 may be stained with white-based ink, and the other surface portions of the optical body sidewall 240b may be stained with black-based ink.

The optical body 200 is securely received and fastened in the bottom chassis 300. Here, the optical body 200 is firmly fastened to the bottom chassis 300 to substantially prevent breakage of the light source 120 due to the movement of the optical body 200.

For this purpose, the optical body 200 may further include a fastening lug 250a which is formed on at least a portion of an optical body sidewall outside surface 270 or at least a portion of the bottom plate outside surface 250. The fastening lug 250a may also be formed at boundaries between the optical body sidewalls 240a and 240c and the bottom plate outside surface 250. Here, the at least a portion of the optical body sidewall outside surface 270 having thereon the fastening lug 250a may be at least a portion of outer surfaces of the optical body sidewalls 240a and 240c which are substantially orthogonal to the optical body sidewall 240b defining the light source receiving space 290, and the at least a portion of the bottom plate outside surface 250 having thereon the fastening lug 250a may be at least a portion of outer surfaces of opposite sides of the bottom plate 210 which are substantially orthogonal to the optical body sidewall 240b defining the light source receiving space 290.

The fastening lug 250a is inserted into insertion holes 311 and 331 which are formed on at least one of the bottom chassis sidewalls 310, 320, 330, and 340, e.g., the bottom chassis sidewalls 310 and 330.

The optical body 200 may further include a movement prevention groove 250b in addition to the above-described fastening lug 250a, in order to substantially prevent the movement of the optical body 200, The movement prevention groove 250b may be formed on at least a portion of the optical body sidewall outside surface 270 or at least a portion of the bottom plate outside surface 250. Like the fastening lug 250a, the movement prevention groove 250b may also be formed at boundaries between the optical body sidewalls 240a and 240c and the bottom plate outside surface 250.

Folding portions 312 and 332 formed on at least one of the bottom chassis sidewalls 310, 320, 330, and 340, e.g., the bottom chassis sidewalls 310 and 330, are inserted into the movement prevent groove 250b,

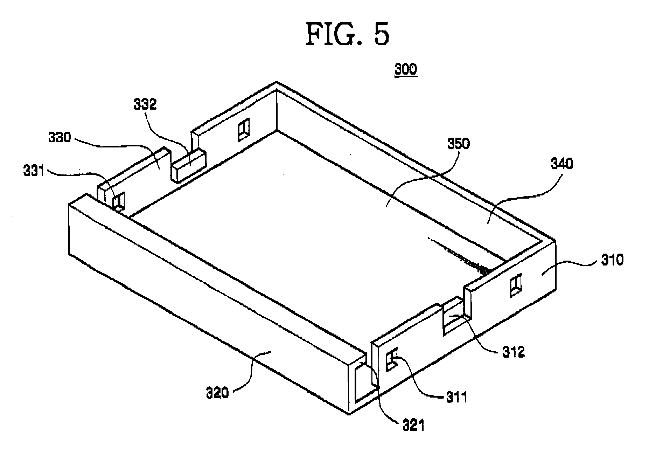

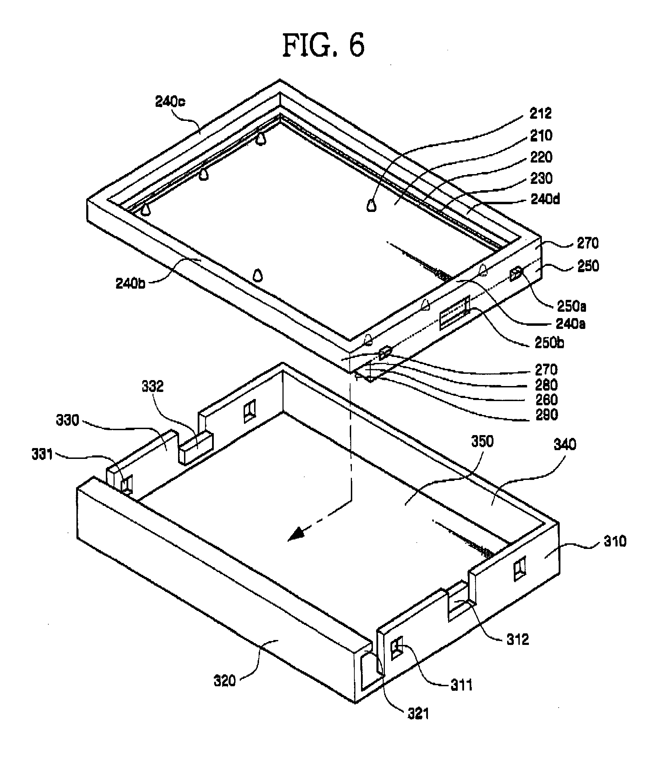

The bottom chassis 300 will now be described with reference to FIGS. 5 and 6. FIG, 5 is a perspective view illustrating a bottom chassis included in the liquid crystal display of FIG. 1, and FIG. 6 is a schematic perspective view illustrating the assembling of the optical body of FIG. 2 and the bottom chassis of FIG. 5.

Referring to FIGS. 5 and 6, together with FIG. 1, the bottom chassis 300 includes the bottom surface 350, and the bottom chassis sidewalls 310, 320, 330, and 340 formed along edges of the bottom surface 350. The liquid crystal panel 113, the light source 120, the optical sheets 130, the reflective sheet 140, and the optical body 200 are received in a space defined by the bottom chassis sidewalls 310, 320, 330, and 340.

The bottom chassis sidewalls 310, 320, 330, and 340 may form a substantially rectangular frame, The bottom chassis sidewalls 310, 320, 330, and 340 are substantially vertical with respect to the bottom surface 350, and are assembled with the optical body 200 and/or the top chassis 150.

Among the bottom chassis sidewalls 310, 320, 330, and 340, the bottom chassis sidewall 320 has a sidewall extension portion 321 which extends toward the bottom chassis sidewall 340 of the bottom chassis 300. The bottom chassis sidewall 320 and the sidewall extension portion 321 form a C-shaped structure. The sidewall extension portion 321 presses the optical body sidewall 240b so that the optical body 200 is fastened to the bottom chassis 300,

As such, the sidewall extension portion 321 allows the optical body 200 to be firmly fastened to the bottom chassis 300 so that movement of the optical body 200 is substantially prevented, thereby substantially preventing breakage of the light source 120 due to movement of the optical body 200.

The bottom chassis sidewall 320 and the bottom surface 350 substantially enclose the light source 120. The surface portions of the bottom chassis sidewall 320 and the bottom surface 350 facing the light source 120 may be coated with a reflective material to prevent loss of light emitted from the light source 120. When light sources are disposed at both sides of the liquid crystal display 100, the bottom chassis sidewall 320, the bottom chassis sidewall 340 opposite to the bottom chassis sidewall 320, and the bottom surface 350 substantially enclose the light sources. In this case, it should be understood that surface portions of the bottom chassis sidewall 340 and the bottom surface 350 facing a corresponding one of the light sources may also be coated with a reflective material.

When the optical body 200 is received in the bottom chassis 300, the optical body sidewall 240b is inserted into the sidewall extension portion 321 of the bottom chassis 300 in an arrow direction shown in FIG. 6,

At least one of the bottom chassis sidewalls 310, 320, 330, and 340, e.g., the bottom chassis sidewalls 310 and 330, may have the insertion holes 311 and 331. Respective ones of the above-described fastening lug 250a of the optical body 200 are inserted into the insertion holes 311 and 331 so that the optical body 200 is fastened to the bottom chassis 300.

At least one of the bottom chassis sidewalls 310, 320, 330, and 340, e.g., the bottom chassis sidewalls 310 and 330, may have the folding portions 312 and 332. The folding portions 312 and 332 are formed by partially cutting and folding the bottom chassis sidewalls 310 and 330. The folding portions 312 and 332 are inserted into respective ones of the above-described movement prevention groove 250b of the optical body 200 so that the optical body 200 is firmly fastened to the bottom chassis 300.

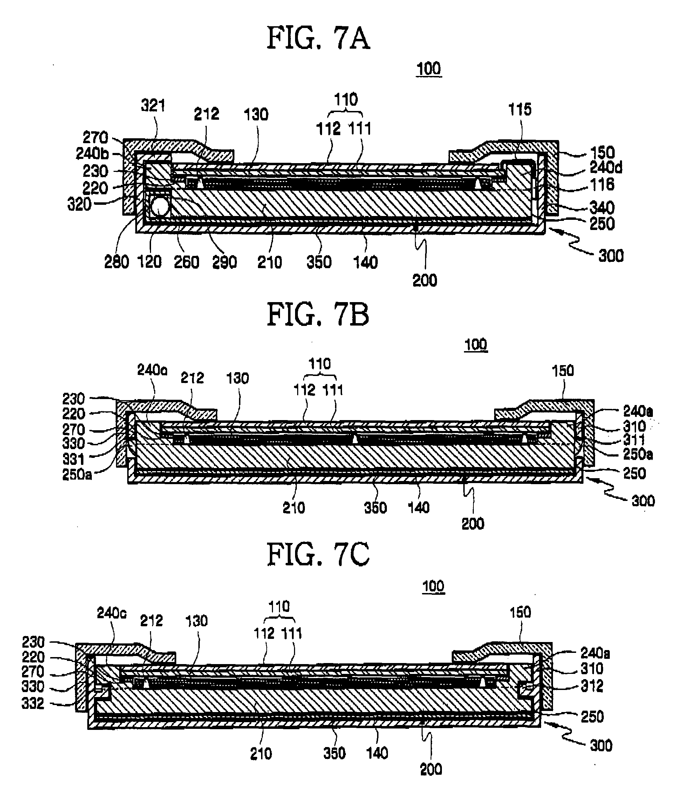

The assembled structure and functions of the liquid crystal display 100 will now be described with reference to FIGS. 7A through 7C. FIG. 7A is a sectional view taken along a line D-D' of FIG, 1, FIG. 7B is a sectional view taken along a line E-E' of FIG. 1, and FIG. 7C is a sectional view taken along a line F-F' of FIG. 1,

Referring to FIGS. 7A through 7C, together with FIG. 1, the liquid crystal display 100 according to an embodiment of the present invention is an edge-type liquid crystal display wherein the light source 120 is received in the light source receiving space 290 defined by the bottom surface 280 of the optical body sidewall 240b and the bottom plate outside surface 260.

The optical body 200 includes the fastening lug 250a and/or the movement prevention groove 250b, and the fastening lug 250a and/or the movement prevention groove 250b is/are engaged with the insertion holes 311 and 331 and/or the folding portions 312 and 332 of the bottom chassis 300, thereby substantially preventing breakage of the light source 120. Moreover, the optical body 200 and the bottom chassis 300 serve as light source covers, and thus, there is no need to separately use a light source cover.

The optical body 200 may further include the embossing portions 212 protruding from edges of the upper surface of the bottom plate 210. Thus, the embossing portions 212 can be inserted into the insertion holes 132 of the optical sheets 130, thereby facilitating the fastening of the optical sheets 130 to the bottom plate 210.

According to the liquid crystal display 100 of an embodiment of the present invention, the optical body 200 can support the liquid crystal panel 113 and guide light, and thus, there is no need to separately use a component for supporting the liquid crystal panel 113 and a component for guiding light, thereby reducing the number of components, resulting in a reduction in manufacturing costs and time. Moreover, structural elements of the optical body 200 are integrally formed, thereby reducing the entry of foreign substances into the liquid crystal display 100.

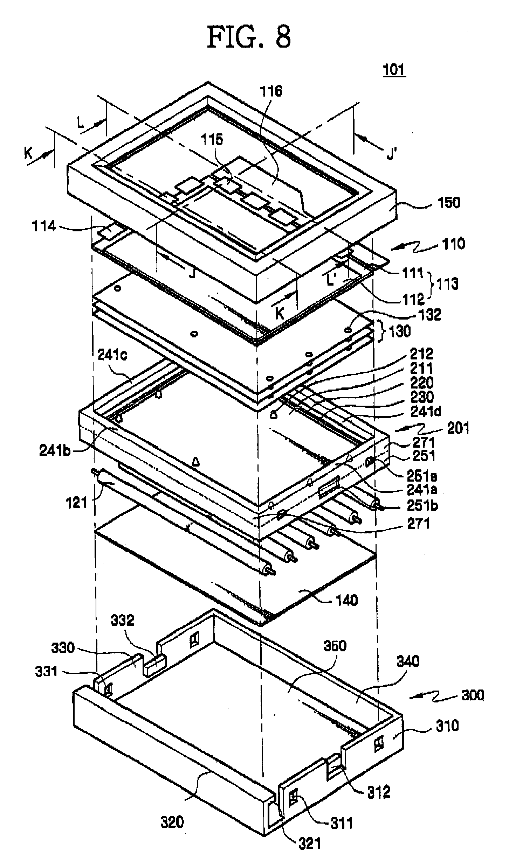

Hereinafter, a liquid crystal display according to an embodiment of the present invention will be described with reference to FIGS. 8 through 11C. FIG. 8 is an exploded perspective view illustrating a liquid crystal display (101) according to an embodiment of the present invention. For the convenience of explanation, components which have substantially the same functions as those described above are denoted by the same reference numerals as the corresponding components and a detailed description thereof will be omitted or briefly given. The liquid crystal display 101 has substantially the same structure as the liquid crystal display 100 except for the points described below, That is, as illustrated in FIGS, 8 through 11C, the liquid crystal display 101 is a direct-type liquid crystal display wherein light sources are arranged below an optical body.

Referring to FIG. 8, the liquid crystal display 101 includes a liquid crystal panel assembly 110, light sources 121, optical sheets 130, a reflective sheet 140, a top chassis 150, an optical body 201, and a bottom chassis 300.

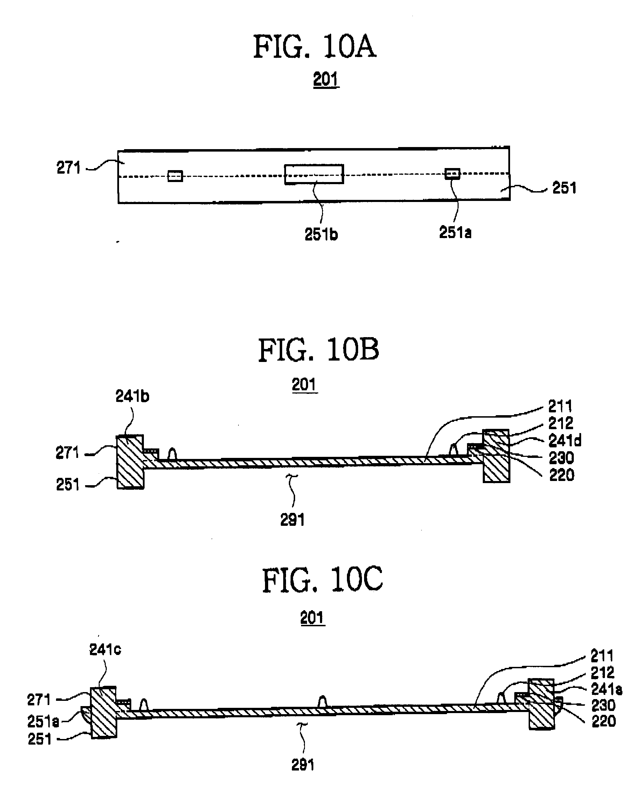

The light sources 121 are disposed below the optical body 201, and more specifically, in a light source receiving space 291 of FIGS 10B-D, and emit light toward a liquid crystal panel 113 through a bottom plate 211 of the optical body 201, That is, the liquid crystal display 101 is a direct-type liquid crystal display wherein the light sources 121 are arranged below the bottom plate 211 of the optical body 201 to be spaced apart by a predetermined distance and positioned at the same phase.

In order to achieve brightness uniformity by uniformly distributing a discharge gas in the light sources 121, the light sources 121 may be arranged horizontally with respect to the liquid crystal panel 113.

The function, construction, position, etc. of the optical sheets 130 are as described above,

The reflective sheet 140 has a substantially rectangular shape, The reflective sheet 140 is made of the same material as described above and performs the same function. However, unlike the reflective sheet described above, both sides of the reflective sheet 140 orthogonal to the lengthwise direction of the light sources 121 are inclined to substantially prevent light loss.

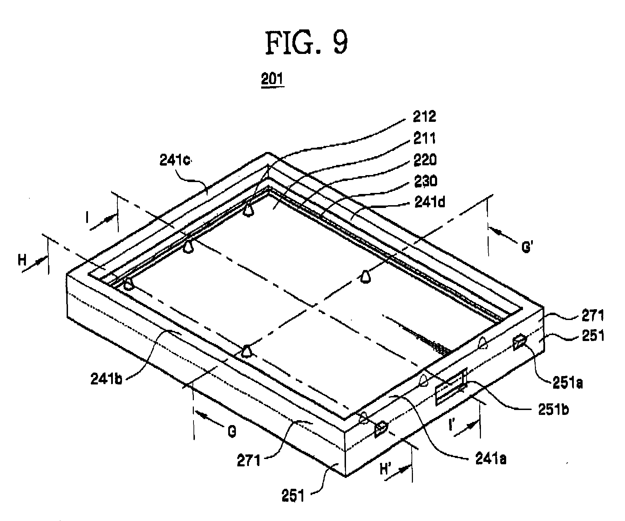

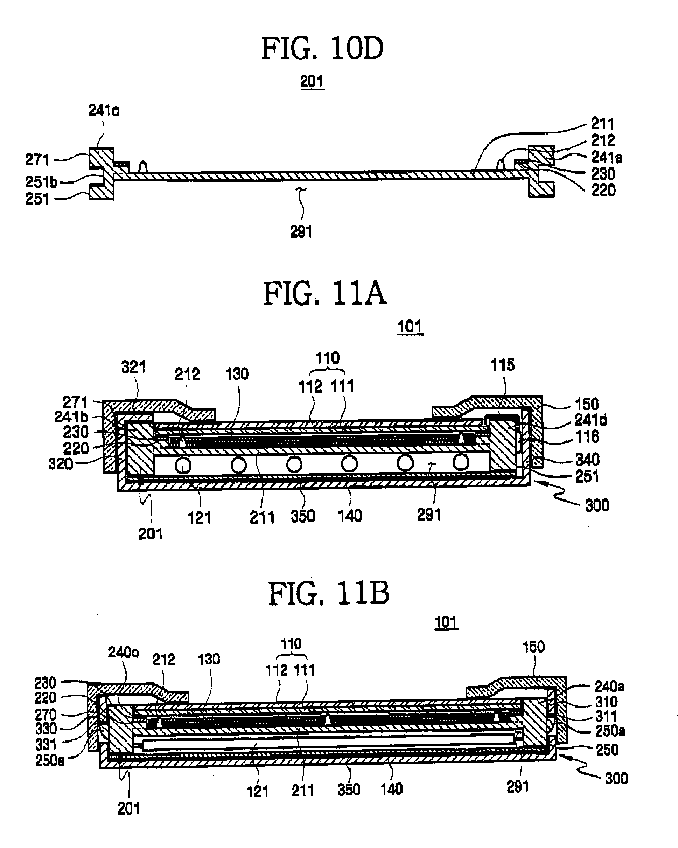

The optical body 201 will now be described in detail with reference to FIGS, 9 through 10D. FIG. 9 is a perspective view illustrating an optical body included in the liquid crystal display of FIG. 8, FIG. 10A is a right side view of the optical body of FIG. 9, FIG. 10B is a sectional view taken along a line G-G' of FIG. 9, FIG. 10C is a sectional view taken along a line H-H' of FIG. 9, and FIG. 10D is a sectional view taken along a line I-I' of FIG. 9.

Referring to FIGS. 9 through 10D, together with FIG. 8, the optical body 201 includes a bottom plate 211, a securing platform 220 formed around the edges of the upper surface of the bottom plate 211, and optical body sidewalls 241a, 241 b, 241c, and 241 d which extend outwardly and upwardly from the securing platform 220 and the bottom plate 211 to surround the securing platform 220 and which extend downwardly from the bottom plate 211. A light source receiving space 291 for receiving the light sources 121 is defined by lower surfaces of the bottom plate 211 and the optical body sidewalls 241a, 241b, 241c, and 241d, In the optical body 201, the bottom plate 211 for diffusing light, the securing platform 220 for securely receiving the liquid crystal panel 113, and the optical body sidewalls 241a, 241b, 241c, and 241d are integrally formed.

The bottom plate 211 serves to diffuse light emitted from the light sources 121, thereby enhancing brightness uniformity.

In order to efficiently diffuse light emitted from the light sources 121, the bottom plate 211 may be made of a transparent material. For example, the bottom plate 211 may be formed using a dispersion of light-diffusing microparticles in a material such as PC (polycarbonate).

The optical body 201 includes the bottom plate 211, the securing platform 220, and the optical body sidewalls 241 a, 241b, 241 c, and 241d, Thus, in order to achieve such a structure, the optical body 201 may be formed by an injection molding process using a transparent resin material.

The optical body 201 transmits light emitted from the light sources 121 to the liquid crystal panel 113, In detail, the bottom plate 211 of the optical body 201 diffuses light emitted from the light sources 121 received in the light source receiving space 291 below the bottom plate 211 and transmits the diffused light to the liquid crystal panel 113.

The bottom plate 211 may be thinner than the bottom plate 310. Thus, to substantially prevent the sagging of the center portion of the bottom plate 211, the center portion of the bottom plate 211 may be supported by a supporter (not shown).

Embossing portions 212 formed around the edges of the upper surface of the bottom plate 211 are as described above. The embossing portions 212 are inserted into insertion holes 132 formed in the above-described optical sheets 130. By doing so, the optical sheets 130 can be firmly fastened to the optical body 201.

The securing platform 220 and a resin layer 230 formed around the edges of the upper surface of the bottom plate 211 are as described above. The securing platform 220 may be stained with black-based ink in order to increase a light leakage prevention effect, as described above.

The optical body sidewalls 241 a, 241b, 241 c, and 241d extend outwardly and upwardly from the securing platform 220 and the bottom plate 211 to surround the securing platform 220, and at the same time, extend downwardly from the bottom plate 211.

The optical body sidewalls 241a, 241b, 241c, and 241d may form a substantially rectangular frame, like the securing platform 220, to surround side portions of the liquid crystal panel 113 so as to secure the liquid crystal panel 113 to the securing platform 220.

Lower portions of the optical body sidewalls 241 a, 241 b, 241 c, and 241d, together with the bottom plate 211, define the light source receiving space 291.

Among optical body sidewall outside surfaces 251 and 271, the optical body sidewall outside surface 251 positioned below the bottom plate 211 may be stained with white-based ink in order to substantially prevent loss of light emitted from the light sources 121 to side portions of the liquid crystal display 101.

Among the optical body sidewall outside surfaces 251 and 271, the optical body sidewall outside surface 271 positioned above the bottom plate 211, together with the securing platform 220, may be stained with black-based ink in order to substantially prevent a light leakage phenomenon.

Portions of the optical body sidewall outside surfaces 251 and 271 corresponding to the bottom plate 211 may be stained with white-based ink in order to substantially prevent light loss, but may also be stained with black-based ink in order to substantially prevent a light leakage phenomenon. Alternatively, some portions of the optical body sidewall outside surfaces 251 and 271 corresponding to the bottom plate 211 may be stained with white-based ink and the other portions may be stained with black-based ink.

The above-described optical body 201 is securely received and fastened in the bottom chassis 300. In order to securely fasten the optical body 201 to the bottom chassis 300, the optical body 201 may further include a fastening lug 251a and/or a movement prevention groove 251b which is/are formed on at least a portion of the optical body sidewall outside surface 271,

The fastening lug 251a and/or the movement prevent groove 251b is/are engaged with insertion grooves 311 and 331 and/or folding portions 312 and 332 formed on at least one of bottom chassis sidewalls 310, 320, 330, and 340, e.g., the bottom chassis sidewalls 310 and 330.

Referring again to FIG. 8, the bottom chassis 300 includes a bottom surface 350, and the bottom chassis sidewalls 310, 320, 330, and 340 formed along edges of the bottom surface 350. The bottom chassis 300 receives the liquid crystal panel 113, the light sources 120, the optical sheets 130, the reflective sheet 140, and the optical body 201 in a space defined by the bottom chassis sidewalls 310, 320, 330, and 340.

Among the bottom chassis sidewalls 310, 320, 330, and 340, the bottom chassis sidewall 320 has a sidewall extension portion 321 which extends toward the bottom surface 350 of the bottom chassis 300. The optical body sidewall 241b is pressed under the sidewall extension portion 321 so that the optical body 201 is fastened to the bottom chassis 300.

At least one of the bottom chassis sidewalls 310, 320, 330, and 340, e.g., the bottom chassis sidewalls 310 and 330, may have the insertion holes 311 and 331. The above-described fastening lug 251a of the optical body 201 is inserted into the insertion holes 311 and 331 so that the optical body 201 is fastened to the bottom chassis 300. Moreover, at least one of the bottom chassis sidewalls 310, 320, 330, and 340, e.g., the bottom chassis sidewalls 310 and 330, may have the folding portions 312 and 332, The folding portions 312 and 332 are inserted into the above-described movement prevention groove 251b of the optical body 201 so that the optical body 201 is firmly fastened to the bottom chassis 300.

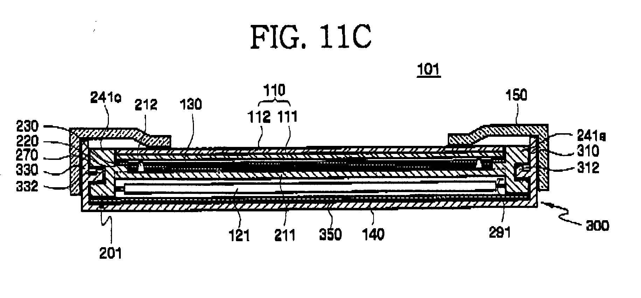

The assembled structure and functions of the liquid crystal display 101 will now be described with reference to FIGS. 11A through 11C. FIG. 11A is a sectional view taken along a line J-J' of FIG, 8, FIG. 11B is a sectional view taken along a line K-K' of FIG. 8, and FIG, 11C is a sectional view taken along a line L-L' of FIG. 8.

Referring to FIGS. 11A through 11C, together with FIG. 8, the liquid crystal display 101 according to an embodiment of the present invention is a direct-type liquid crystal display wherein the light sources 121 are arranged below the bottom plate 211.

The optical body 201 includes the fastening lug 251a and/or the movement prevention groove 251b, and the fastening lug 251a and/or the movement prevention groove 251b is/are engaged with the insertion holes 311 and 331 and/or the folding portions 312 and 332 of the bottom chassis 300, thereby substantially preventing breakage of the light sources 120.

The optical body 201 includes the securing platform 220 for securely receiving the liquid crystal panel 113, the optical body sidewalls 241a, 241b, 241c, and 241d surrounding the securing platform 220 and the bottom plate 221, and the bottom plate 211 for diffusing light emitted from the light sources 121. The securing platform 220, the optical body sidewalls 241a, 241b, 241 c, and 241 d, and the bottom plate 211 are integrally formed. As such, the optical body 201 serves to support the liquid crystal panel 113 and diffuse light, and thus, there is no need to separately include a component for supporting the liquid crystal panel 113 and a component for diffusing light, thereby reducing the number of components, resulting in a reduction in manufacturing costs and time, Moreover, structural elements of the optical body 201 are formed integrally, thereby reducing the entry of foreign substances into the liquid crystal display 101,

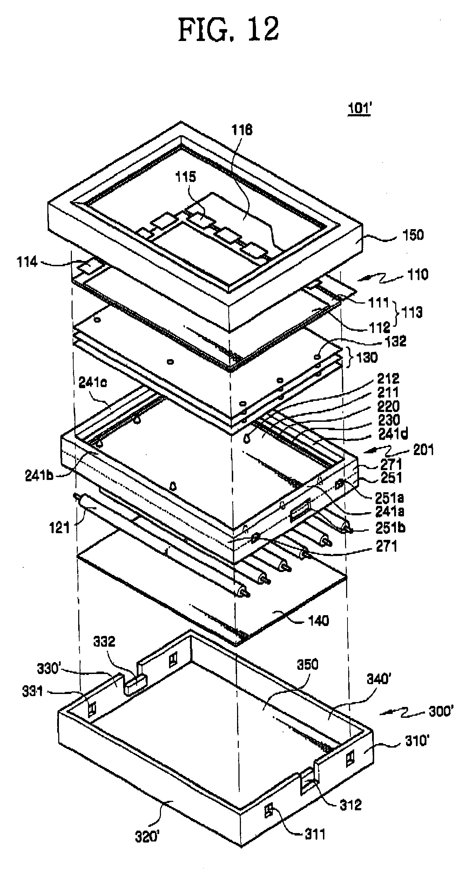

Hereinafter, a liquid crystal display according to an embodiment of the present invention will be described in detail with reference to FIG, 12. FIG. 12 is an exploded perspective view illustrating an embodiment of the liquid crystal display 101' according to the present invention. For the convenience of explanation, components which have substantially the same functions as those in described above are denoted by the same reference numerals as the corresponding components and a detailed description thereof will be omitted or briefly given. The liquid crystal display 101' has substantially the same structure as that of the liquid crystal display 101 except for the points described below. That is, as illustrated in FIG. 12, in the liquid crystal display 101', a bottom chassis is in the form of a substantially rectangular frame.

Referring to FIG. 12, a liquid crystal display 101' includes a liquid crystal panel assembly 110, light sources 121, optical sheets 130, a reflective sheet 140, a top chassis 150, a optical body 201, and a bottom chassis 300'.

In the liquid crystal display 101', the bottom chassis 300' has a substantially rectangular frame shape. That is, the bottom chassis 300' includes a bottom surface 350, but bottom chassis sidewalls 310', 320', 330', and 340' formed along edges of the bottom surface 350 include no folding portion, unlike in the liquid crystal display 101.

The bottom chassis sidewalls 310', 320', 330', and 340' are formed vertically with respect to the bottom surface 350, and thus, the optical body 201 can be easily inserted and fastened into the bottom chassis 300'.

While the present invention has been particularly shown and described with reference to exemplary embodiments thereof, it will be understood by those of ordinary skill in the art that various changes in form and details may be made therein without departing from the spirit and scope of the present invention. It is therefore desired that embodiments be considered in all respects as illustrative and not restrictive, reference being made to the appended claims rather than the foregoing description to indicate the scope of the invention.

## Claims

1. A liquid crystal display comprising:
a liquid crystal panel displaying an image;
a light source providing light to the liquid crystal panel; and
an optical body including a light-transmitting portion transmitting light emitted from the light source to the liquid crystal panel and a securing platform formed along edges of the light-transmitting portion and on which the liquid crystal panel is disposed,
wherein the light-transmitting portion and the securing platform are formed as one body.

2. The liquid crystal display of claim 1, wherein the optical body is made of a transparent material, and
wherein the optical body further comprises:
a bottom plate, the securing platform being disposed around the edges of the bottom plate; and
optical body sidewalls which extend outwardly and upwardly from the securing platform to surround the securing platform.

3. The liquid crystal display of claim 2, wherein the optical body further comprises a black- or gray-based resin layer which is disposed between the securing platform and the liquid crystal panel.

4. The liquid crystal display of claim 2, wherein the securing platform and the optical body sidewalls are coated by black-based material.

5. A liquid crystal display comprising:
a liquid crystal panel;
an optical body for guiding light emitted from at least one light source, wherein a securing platform for securely receiving the liquid crystal panel is disposed along edges of the optical body and wherein the at least one light source is disposed at a side of the optical body; and
a bottom chassis for receiving the liquid crystal panel, the optical body, and the at least one light source.

6. The liquid crystal display of claim 5, wherein the optical body is made of a transparent material, and the optical body further comprises:
a bottom plate, the securing platform being disposed around the edges of the upper surface of the bottom plate; and
optical body sidewalls which extend outwardly and upwardly from the securing platform to surround the securing platform.

7. The liquid crystal display of claim 6, wherein the optical body further comprises a black- or gray-based resin layer which is disposed between the securing platform and the liquid crystal panel,

8. The liquid crystal display of claim 6, wherein the optical body further comprises;
a groove formed on the sidewall of the optical body and on which the light source is disposed.

9. The liquid crystal display of claim 8, wherein a portion of the bottom plate outside surface which does not define the light source receiving space and the lower surface of the at least one optical body sidewall disposed above the at least one light source are stained with reflective white-based ink.

10. The liquid crystal display of claim 9, wherein the securing platform, and portions of the optical body sidewalls except the lower surface of the at least one optical body sidewall stained with the white-based ink are stained with black-based ink.

11. The liquid crystal display of claim 6, wherein the bottom plate further comprises one or more embossing portions which protrude upwardly around the edges of the upper surface of the bottom plate, and
wherein the liquid crystal display further comprises an optical sheet comprising an insertion hole through which the embossing portion is inserted so that the optical sheet is fastened to the bottom plate.

12. The liquid crystal display of claim 6, wherein the optical body further comprises a fastening lug which is formed on a optical body sidewall outside surface or a bottom plate outside surface, the bottom chassis further comprises an insertion hole which is formed on at least one bottom chassis sidewall, and the fastening lug is inserted into the insertion hole so that the optical body is fastened to the bottom chassis.

13. The liquid crystal display of claim 12, wherein the optical body further comprises a movement prevention groove which is formed on the optical body sidewall outside surface or the bottom plate outside surface, the bottom chassis further comprises a folding portion which is formed on at least one of the bottom chassis sidewalls, and the folding portion is inserted into the movement prevention groove so that movement of the optical body is substantially prevented.

14. The liquid crystal display of claim 5, wherein an upper portion of one bottom chassis sidewall comprises a sidewall extension portion which extends toward an opposite bottom chassis sidewall of the bottom chassis, and the sidewall extension portion presses an upper portion of a corresponding one of the optical body sidewalls so that the optical body is fastened to the bottom chassis.

15. A liquid crystal display comprising:
a liquid crystal panel;
an optical body for diffusing light emitted from at least one light source, wherein a securing platform for securely receiving the liquid crystal panel is disposed along edges of the optical body, the at least one light source disposed below the optical body; and
a bottom chassis for receiving the liquid crystal panel, the optical body, and the at least one light source.

16. The liquid crystal display of claim 15, wherein the optical body is made of a transparent material,
wherein the optical body further comprises: a bottom plate, the securing platform being disposed around the edges of the upper surface of the bottom plate; and optical body sidewalls which extend outwardly and upwardly from the securing platform and the bottom plate to surround the securing platform and which extend downwardly from the bottom plate, and
wherein lower portions of the bottom plate and the optical body sidewalls define a light source receiving space.

17. The liquid crystal display of claim 16, wherein the optical body further comprises a black- or gray-based resin layer which is disposed between the securing platform and the liquid crystal panel.

18. The liquid crystal display of claim 16, wherein lower portions of the optical body sidewall outside surfaces disposed below the bottom plate are stained with reflective white-based ink.

19. The liquid crystal display of claim 18, wherein upper portions of the optical body sidewalls disposed above the bottom plate and the securing platform are stained with black-based ink.

20. The liquid crystal display of claim 16, wherein the bottom plate further comprises one or more embossing portions which protrude upwardly around the edges of the upper surface of the bottom plate, and
wherein the liquid crystal display further comprises an optical sheet comprising an insertion hole through which the embossing portion is inserted so that the optical sheet is fastened to the bottom plate.

21. The liquid crystal display of claim 16, wherein the optical body further comprises a fastening lug which is formed on a optical body sidewall outside surface, the bottom chassis further comprises an insertion hole which is formed on at least one bottom chassis sidewall, and the fastening lug is inserted into the insertion hole so that the optical body is fastened to the bottom chassis.

22. The liquid crystal display of claim 21, wherein the optical body further comprises a movement prevention groove which is formed on the optical body sidewall outside surface, the bottom chassis further comprises a folding portion which is formed on at least one of the bottom chassis sidewalls, and the folding portion is inserted into the movement prevention groove so that movement of the optical body is prevented.

23. The liquid crystal display of claim 15, wherein an upper portion of one bottom chassis sidewall comprises a sidewall extension portion which extends toward an opposite bottom chassis sidewall of the bottom chassis, and the sidewall extension portion presses an upper portion of a corresponding one of the optical body sidewalls so that the optical body is fastened to the bottom chassis.
